# FASCICULE DE BREVET EUROPEEN

(11) **EP 3 638 476 B1**
(45) Date de publication et mention de la délivrance du brevet: **20.04.2022**
(21) Numéro de dépôt: 18773499.1
(22) Date de dépôt: 12.06.2018
(51) Int. Cl.: B28C 7/16, B28B 1/00, B28B 3/22, B28C 5/12, B28C 5/38, E04G 21/04, B33Y 30/00, B01F 25/314, B01F 27/072, B01F 27/50

(54) **SYSTÈME D'EXTRUSION DE CORDONS DE MATÉRIAU CIMENTAIRE POUR ROBOT DE FABRICATION ADDITIVE DE STRUCTURES ARCHITECTURALES**
SYSTEM ZUM EXTRUDIEREN ZEMENTARTIGER MATERIALPERLEN FÜR EINEN ROBOTER ZUR GENERATIVEN FERTIGUNG VON ARCHITEKTURSTRUKTUREN
SYSTEM FOR EXTRUDING CEMENTITIOUS MATERIAL BEADS FOR AN ARCHITECTURAL STRUCTURE ADDITIVE MANUFACTURING ROBOT

(30) Priorité: 14.06.2017 FR 1755381
(43) Date de publication de la demande: 22.04.2020
(73) Titulaire: Xtreee, 94623 Rungis Cedex (FR)
(72) Inventeur: ROUX, Philippe, 94623 Rungis Cedex (FR); MALLET, Alban, 94623 Rungis Cedex (FR); BOUYSSOU, Charles, 94623 Rungis Cedex (FR); AKHAVAN ZAKERI, Mahriz, 94623 Rungis Cedex (FR); BLANCHET, Laurent, 94623 Rungis Cedex (FR); MOREL, Philippe, 94623 Rungis Cedex (FR); GOSSELIN, Cl ment, 94623 Rungis Cedex (FR); GAUDILLIERE, Nadja, 94623 Rungis Cedex (FR); DUBALLET, Romain, 94623 Rungis Cedex (FR)
(74) Mandataire: Bringer IP
(86) Numéro de dépôt international: PCT/FR2018/051371
(87) Numéro de publication internationale: WO 2018/229419

(56) Documents cités:
- WO-A1-95/13173
- WO-A1-2016/166116
- CN-A- 105 216 333
- CN-U- 204 354 263
- GB-A- 2 267 110
- JP-A- H04 269 299

## Description

### 1. Domaine technique de l'invention

L'invention concerne la fabrication additive de matériaux cimentaires. L'invention concerne plus particulièrement un système d'extrusion de cordons de matériau cimentaire pour robot de fabrication additive de structures architecturales. L'invention concerne également un robot équipé d'un tel système de fabrication additive de structures architecturales.

### 2. Arrière-plan technologique

L'impression 3D de matériaux cimentaires est une branche de la fabrication additive de matériaux cimentaires, dont les applications apparaissent nombreuses et prometteuses dans le domaine de l'architecture et de la construction.

En effet, l'impression 3D des matériaux cimentaires semble pouvoir apporter de nombreux avantages par rapport aux techniques traditionnelles parmi lesquels notamment la possibilité de pouvoir réaliser des formes complexes par ajout de couches successives de matériaux cimentaires, la rapidité des opérations de construction, la réduction des coûts et de la main d'oeuvre, une sécurité améliorée sur les chantiers, etc.

La maitrise de l'impression 3D de matériaux cimentaires fait appel à des compétences dans le domaine de la mécanique des fluides, la mécanique, l'électronique et le génie civil.

Dans tout le texte, les termes « structures architecturales » désignent à la fois des éléments de construction individuels (pont, pilier, mur, mobilier urbain, etc.), des structures complètes (bâtiment, maison, immeuble, etc.) et des pièces architecturales diverses (œuvres artistiques, sculptures, etc.).

L'extrusion de matériau cimentaire destinée à la fabrication d'une structure architecturale met en œuvre une tête d'impression cimentaire comprenant une entrée de matériau cimentaire et une buse de sortie de matériau cimentaire, et un circuit d'alimentation de la tête d'impression en matériau cimentaire comprenant un réservoir de stockage de matériau cimentaire, une conduite reliant le réservoir de stockage et l'entrée de la tête d'impression, et une pompe de gavage de la conduite par le matériau cimentaire issu du réservoir de stockage.

L'une des difficultés de l'impression 3D de matériaux cimentaires réside dans le fait que le matériau cimentaire doit être fourni dans un état rhéologique compatible avec un pompage de ce matériau, c'est à dire suffisamment fluide pour pouvoir être pompé du réservoir de stockage et véhiculé vers la buse de sortie, alors que son état doit être assez visqueux (c'est à dire moins fluide) en aval de la buse de sortie pour pouvoir former une couche autoportante et susceptible de supporter la couche suivante.

Il existe d'ores et déjà quelques systèmes d'impression cimentaire. Cela étant, il s'avère que les systèmes proposés ne permettent pas notamment la présence de porte-à-faux trop importants dans le produit imprimé (la construction réalisée) sauf à ralentir fortement les opérations d'impression, ce qui crée des discontinuités, ou à ajouter des renforts temporaires, ce qui ralentit et complexifie l'impression. L'une des raisons des difficultés des solutions antérieures tient dans le fait que le matériau cimentaire est placé dans un état proche de sa limite de pompage tout en présentant un seuil de cisaillement suffisant pour ne pas s'affaisser. Cette contrainte sur le matériau implique une contrainte forte sur la vitesse d'impression de la pièce fabriquée en limitant le débit et la vitesse du robot, et limite ainsi la complexité de la pièce produite à la résistance du matériau extrudé.

CN 204 354 263 U divulgue un système d'extrusion de cordons de matériau cimentaire suivant le préambule de la revendication 1.

### 3. Objectifs de l'invention

Les inventeurs ont donc cherché à proposer un système d'extrusion de matériau cimentaire qui permet de résoudre au moins certains des inconvénients des solutions antérieures avec l'objectif de pouvoir fournir des pièces complexes sans impacter les performances d'impression.

En particulier, les inventeurs ont cherché à fournir une solution qui permet la mise en œuvre d'un matériau cimentaire semblable à celui qui est coulé dans le cadre des techniques traditionnelles (notamment en terme de résistance) sans néanmoins nécessiter la présence de moule ou de coffrage.

L'invention vise aussi à fournir, dans au moins un mode de réalisation, un système d'extrusion de matériau cimentaire qui permet de fabriquer des pièces architecturales ou de construction complexes.

L'invention vise également à fournir, dans au moins un mode de réalisation, un système d'extrusion qui permet une dépose continue et uniforme du matériau.

L'invention vise aussi à fournir, dans au moins un mode de réalisation de l'invention, un système d'extrusion qui permet l'impression de pièces présentant des porte-à-faux sans néanmoins imposer un ralentissement de la vitesse d'impression.

L'invention vise aussi à fournir, dans au moins un mode de réalisation de l'invention, un système d'extrusion qui permet la fabrication de pièces architecturales ou de construction de manière précise, stable, répétable et à moindre coût.

L'invention vise aussi à fournir un robot équipé d'un système d'extrusion cimentaire selon l'invention.

### 4. Exposé de l'invention

Pour ce faire, l'invention concerne un système d'extrusion de cordons de matériau cimentaire pour robot de fabrication additive de structures architecturales comprenant :
- une tête de dépose de cordons de matériau cimentaire, dite tête d'impression, comprenant une bouche d'entrée de matériau cimentaire, une buse de sortie configurée pour former des cordons de matériau cimentaire, et une enceinte de mélange agencée en amont de ladite buse de sortie qui s'étend selon une direction, dite direction longitudinale,
- un circuit d'alimentation en matériau cimentaire de ladite tête d'impression comprenant un réservoir de stockage de matériau cimentaire, une conduite reliant ledit réservoir de stockage et ladite tête d'impression, et une pompe de gavage de ladite conduite d'alimentation en matériau cimentaire issu dudit réservoir de stockage,
- un dispositif d'adjuvantation relié à ladite tête d'impression en amont de ladite buse de sortie et qui débouche dans ladite enceinte de mélange de manière à pouvoir injecter des adjuvants modifiant les caractéristiques du matériau cimentaire avant éjection desdits cordons du matériau cimentaire par ladite buse de sortie.

Un système selon l'invention est caractérisé en ce que ledit dispositif d'adjuvantation comprend une pluralité d'aiguilles débouchant dans ladite enceinte de mélange selon une direction d'adjuvantation formant avec ladite direction longitudinale un angle compris entre 0 et 90°, chaque aiguille étant reliée à un fût d'adjuvants par l'intermédiaire d'un doseur volumétrique, de manière à pouvoir injecter lesdits adjuvants dudit fût d'adjuvants dans ladite enceinte de mélange selon ladite direction d'adjuvantation.

Un système selon l'invention permet donc de modifier les propriétés du matériau cimentaire par l'ajout d'adjuvants en amont de la buse de sortie de manière à pouvoir adapter le matériau cimentaire éjecté de la buse de sortie au besoin de la structure architecturale à fabriquer. Il est donc possible avec un système selon l'invention de véhiculer le matériau cimentaire jusqu'à la tête d'impression dans un état compatible avec un pompage optimisé et de ne modifier ses propriétés physiques (par exemple sa rhéologie, sa force tensioactive, sa plasticité, sa stabilité, sa thixotropie, etc.) uniquement avant la dépose de la couche en sortie de buse.

Il est donc possible avec un système selon l'invention de déposer des couches de matériau cimentaire en sortie de buse qui présentent des caractéristiques proches du matériau cimentaire mis en œuvre dans le cadre des techniques traditionnelles de construction.

En d'autres termes, un système selon l'invention permet d'utiliser en entrée de système (le réservoir de stockage) un matériau cimentaire dans un premier état rhéologique, de convoyer ce matériau de manière contrôlée jusqu'à la tête d'impression, elle même destinée à être fixée à un système de positionnement d'impression 3D tel qu'un bras articulé, et à altérer les propriétés du matériau, tel que par exemple son état rhéologique, par l'ajout d'adjuvants.

En outre et selon l'invention, la tête d'impression comprend une enceinte de mélange agencée en amont de la buse de sortie et dans laquelle débouche le dispositif d'adjuvantation, ce denier comprenant une pluralité d'aiguilles d'adjuvantation débouchant dans l'enceinte de mélange selon une direction d'adjuvantation formant avec la direction longitudinale un angle compris entre 0 et 90°. Chaque aiguille est reliée à un fût d'adjuvants par l'intermédiaire d'un doseur volumétrique de manière à pouvoir injecter lesdits adjuvants dudit fût d'adjuvants dans ladite enceinte de mélange selon ladite direction d'adjuvantation.

Ainsi, les adjuvants sont ajoutés au matériau cimentaire dans une enceinte de mélange suivant une direction d'adjuvantation qui forme avec la direction longitudinale un angle prédéterminé. Cette direction longitudinale est la direction principale de l'enceinte de mélange, qui est aussi la direction du flux de matériau cimentaire vers la buse de sortie. L'injection d'adjuvants suivant une direction d'adjuvantation prédéterminée permet d'obtenir rapidement un mélange homogène du matériau cimentaire et des adjuvants. Une adjuvantation à 90°, c'est à dire une adjuvantation radiale favorise le mélange des adjuvants avec le matériau cimentaire circulant au voisinage de l'axe central de l'enceinte de mélange. Une adjuvantation proche de 0° favorise le mélange des adjuvants avec le matériau circulant au voisinage des parois de l'enceinte de mélange. Une adjuvantation à 45° est un bon compromis entre les deux angles précédemment décrits.

L'invention prévoit qu'une pluralité d'aiguilles injecte les adjuvants dans l'enceinte de mélange selon ladite direction d'adjuvantation, ce qui permet une distribution homogène des adjuvants dans le matériau cimentaire. De préférence, les aiguilles sont agencées au voisinage de la partie amont de l'enceinte de mélange, c'est à dire à l'opposé de la buse de sortie. Chaque aiguille est reliée au fût d'adjuvants par l'intermédiaire d'un doseur volumétrique, ce qui permet de contrôler le débit d'adjuvant injecté dans l'enceinte de mélange. Ainsi, le matériau cimentaire est conduit dans l'enceinte de mélange avec un débit constant, contrôlé par la pompe de gavage asservie en pression/débit et les adjuvants sont conduits vers l'enceinte de mélange avec un débit constant contrôlé par les doseurs volumétriques. De préférence, chaque doseur volumétrique est relié à l'aiguille par l'intermédiaire d'un raccord de verrouillage du type Luer, plus connu sous la dénomination anglaise de « luer-lock ».

Avantageusement et selon l'invention, lesdits adjuvants injectés par ledit dispositif d'adjuvantation sont des adjuvants adaptés pour modifier la rhéologie du matériau cimentaire avant extrusion des cordons de matériau cimentaire par la buse de sortie.

Selon cette variante avantageuse, les propriétés modifiées du matériau par la présence du dispositif d'adjuvantation concernent sa rhéologie, c'est à dire les propriétés liées à l'écoulement du matériau. De préférence, l'invention vise à augmenter la viscosité du matériau cimentaire juste avant la dépose du matériau.

Avantageusement et selon l'invention, ledit dispositif d'adjuvantation comprend une pompe péristaltique agencée entre le fût d'adjuvants et les dits doseurs volumétriques.

La présence d'une pompe péristaltique permet d'améliorer le pompage des adjuvants, en particulier dans le cas d'une distance importante, par exemple supérieure à 5 mètres, entre le fût d'adjuvants et les aiguilles du dispositif d'adjuvantation. Bien entendu, cette distance à partir de laquelle un doseur volumétrique est préférable dépend du type de doseur volumétrique, du circuit d'adjuvantation et de la différence de hauteur entre le fût d'adjuvants et des aiguilles.

Avantageusement, un système selon l'invention comprend un capteur de pression/débit dudit matériau cimentaire circulant dans ladite tête d'impression adapté pour transmettre des mesures de pression/débit à ladite pompe de gavage, et ladite pompe de gavage est configurée pour asservir le gavage de la conduite d'alimentation auxdites mesures transmises par ledit capteur.

Un système selon cette variante avantageuse permet donc de véhiculer le matériau cimentaire du réservoir de stockage jusqu'à la tête d'impression tout en contrôlant et maitrisant le débit et la pression du matériau cimentaire. L'invention selon cette variante permet donc de maintenir la pression du matériau cimentaire dans une plage prédéterminée de valeurs à l'entrée dans la tête d'impression, par exemple entre 2 et 6 bars. Cette maitrise de la pression et du débit du matériau cimentaire dans la tête d'impression permet une dépose continue et uniforme des cordons de matériau cimentaire par la buse de sortie. Il est donc possible avec un système selon cette variante d'obtenir rapidement des pièces complexes sans imposer de contraintes particulières sur le matériau, si ce n'est la pression et le débit du matériau cimentaire qui alimente la buse de la tête d'impression. L'asservissement de la pompe de gavage permet en outre de corriger les éventuelles imperfections géométriques d'extrusion des cordons.

Avantageusement et selon l'invention, la pompe de gavage est une pompe à vis excentrée de manière à limiter les pulsations dans la conduite d'alimentation.

Cela étant dans d'autres modes de réalisation, la pompe de gavage peut être une pompe péristaltique, une pompe à piston, et de manière générale toute pompe adaptée pour véhiculer un matériau cimentaire et être asservie en pression/débit.

Avantageusement et selon l'invention, la tête d'impression comprend en outre :
- un mélangeur dynamique configuré pour pouvoir mélanger ledit matériau cimentaire et lesdits adjuvants fournis par ledit dispositif d'adjuvantation dans l'enceinte de mélange,
- une pompe de dosage à vis excentrée configurée pour pouvoir véhiculer le matériau cimentaire de la bouche d'entrée de la tête d'impression vers ladite enceinte de mélange.

Selon cette variante avantageuse, la tête d'impression comprend en outre, associée à l'enceinte de mélange, un mélangeur dynamique permettant de mélanger le matériau cimentaire et les adjuvants de manière homogène en amont de la buse de sortie. Le matériau cimentaire est conduit vers l'enceinte de mélange par une pompe de dosage à vis excentrée, ce qui permet de véhiculer le matériau vers l'enceinte à débit constant, sans générer de pulsations. En outre, cette pompe permet de réduire les éventuelles pulsations créées par la pompe de gavage.

Avantageusement et selon l'invention, ledit mélangeur dynamique comprend au moins un arbre s'étendant longitudinalement dans l'enceinte de mélange, et portant des doigts radiaux répartis le long de l'arbre, et un moteur configuré pour pouvoir entrainer cet arbre en rotation de manière à pouvoir fournir un mélange homogène du matériau cimentaire et des adjuvants.

Un système selon cette variante avantageuse permet d'obtenir un mélange homogène du matériau cimentaire et des adjuvants. La présence de doigts radiaux répartis le long de l'arbre du mélangeur permet de distribuer de manière égale les particules de matériau dans l'enceinte de mélange. Selon une variante, le mélangeur comprend deux bras parallèles, chaque bras comprenant des doigts radiaux, de manière à former un organe du type « batteur à oeufs ». Le moteur du mélangeur peut être commandé de manière à inverser son sens de rotation du/des axes pendant l'impression.

Avantageusement, un système d'extrusion selon l'invention comprend en outre un capteur de pression dudit matériau cimentaire en amont de l'enceinte de mélange, dit capteur de sécurité, configuré pour mesurer la pression en amont de ladite enceinte de mélange de manière à pouvoir prévenir des risques de bouchage de l'enceinte de mélange ou de la buse de sortie.

Avantageusement et selon l'invention, le réservoir de stockage dudit circuit d'alimentation est une trémie comprenant une ouverture supérieure de réception de gâchées de matériaux cimentaires et une sortie inférieure reliée à ladite conduite d'alimentation.

Une trémie permet de recevoir aisément des gâchées de matériaux cimentaires apportées par un opérateur. Une trémie permet également d'être aisément alimentée par un dispositif de fabrication du matériau cimentaire qui est agencé au dessus de la trémie.

Avantageusement et selon cette variante, ladite trémie est équipée d'un agitateur comprenant un arbre portant une pluralité de pales latérales, et un moteur de mise en rotation de l'arbre de manière à pouvoir remuer le matériau cimentaire de ladite trémie.

L'agitateur permet de maintenir le matériau cimentaire dans un état rhéologique quasi-constant avant pompage par la pompe de gavage. En d'autres termes, cette trémie agitatrice forme un réservoir tampon pouvant recevoir différentes gâchées de matériau cimentaire. Une trémie présente une forme conique qui permet de conserver l'historique des gâchées.

Avantageusement, un système d'extrusion selon l'invention présente une section constante depuis la pompe de gavage jusqu'à la buse de sortie de manière à pouvoir véhiculer le matériau cimentaire sans générer de zones de perturbation.

L'invention concerne également un robot de fabrication additive de structures architecturales comprenant un système de positionnement, tel qu'un bras articulé, piloté par une unité de commande.

Le robot de fabrication additive selon l'invention est caractérisé en ce qu'il comprend un système d'extrusion de matériau cimentaire selon l'invention.

Un tel robot comprend un système d'extrusion selon l'invention dont la tête d'impression est portée par un système de positionnement, tel qu'un bras articulé, lui-même piloté par un ordinateur.

L'invention concerne également un système d'extrusion et un robot d'impression additive caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique fonctionnelle d'un système d'extrusion selon un mode de réalisation de l'invention,
- la figure 2 est une vue schématique fonctionnelle d'un dispositif d'adjuvantation d'un système d'extrusion selon un mode de réalisation de l'invention,
- la figure 3 est une vue schématique fonctionnelle d'une tête d'impression d'un système d'extrusion selon un mode de réalisation de l'invention,

- les figures 4a et 4b sont des vues schématiques partielles d'aiguilles d'un dispositif adjuvantation qui débouchent dans une enceinte de mélange d'un système d'extrusion selon un mode de réalisation de l'invention,
- la figure 5 est une vue schématique en coupe d'une portion de l'enceinte de mélange d'un système d'extrusion selon un mode de réalisation de l'invention.

### 6. Description détaillée d'un mode de réalisation de l'invention

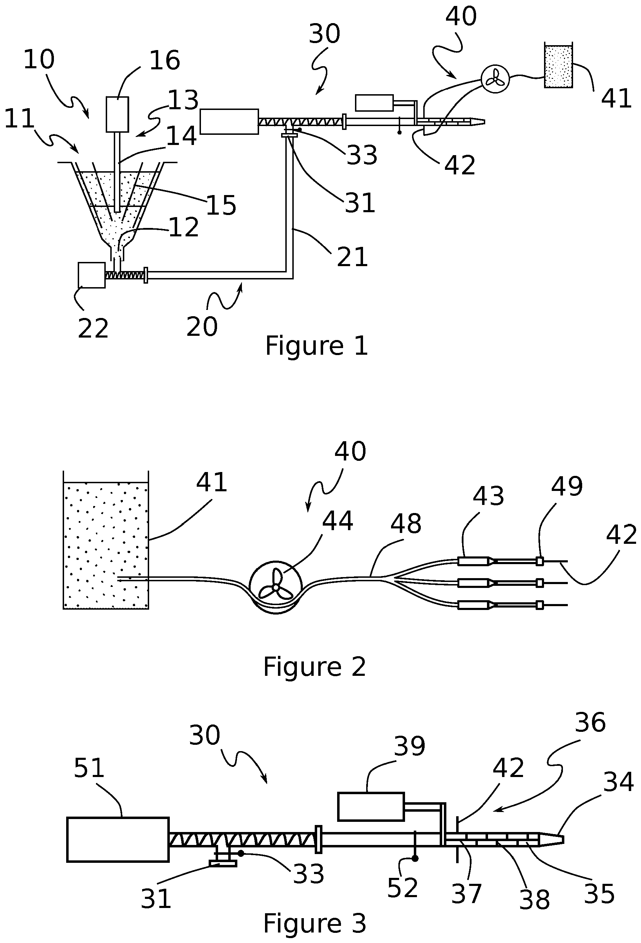

Sur les figures, les échelles et les proportions ne sont pas strictement respectées et ce, à des fins d'illustration et de clarté. Dans toute la description détaillée qui suit en référence aux figures, sauf indication contraire, chaque élément du système d'extrusion est décrit tel qu'il est agencé lorsque le système d'extrusion est dans la configuration de la figure 1.

En outre, les éléments identiques, similaires ou analogues sont désignés par les mêmes références dans toutes les figures.

Un système d'extrusion selon le mode préférentiel de réalisation de l'invention, tel que représenté sur la figure 1, comprend un réservoir de stockage 10 de matériau cimentaire, une tête d'impression 30, un circuit 20 d'alimentation en matériau cimentaire de la tête d'impression agencé entre le réservoir de stockage 10 et la tête d'impression 30, et un dispositif d'adjuvantation 40 relié à la tête d'impression 30.

Chacun des différents organes du système vont maintenant être décrits en détail.

### Réservoir de stockage

Le réservoir de stockage 10 est de préférence une trémie comprenant une ouverture supérieure 11 adaptée pour recevoir des gâchées de matériaux cimentaires et une sortie inférieure 12 reliée au circuit 20 d'alimentation. La trémie comprend en outre un agitateur 13 comprenant un arbre 14 portant une pluralité de pales latérales 15 par l'intermédiaire d'axes perpendiculaires à l'arbre 14, et un moteur 16 de mise en rotation de l'arbre 14. Le moteur 14 est par exemple un moteur électrique configuré pour pouvoir entrainer à faible vitesse, par exemple à une vitesse de 6 tours/minute, l'arbre 14 de l'agitateur 13. L'utilisation d'un moteur thermique est bien sûr possible sans modifier les performances du système d'extrusion selon l'invention. Le rôle de l'agitateur est de pouvoir maintenir le matériau cimentaire dans la trémie à un état rhéologique quasi-constant avant d'être conduit vers la tête d'impression par le circuit 20 d'alimentation.

Le matériau cimentaire utilisé est par exemple un prémix à base de ciment avec des particules fines, hydraté et fluidifié .

### Circuit d'alimentation

Le circuit d'alimentation 20 relie le réservoir de stockage 10 à la tête d'impression 30. Ce circuit comprend une conduite 21 reliant la sortie 12 du réservoir de stockage 10 à une bouche d'entrée 31 de la tête d'impression 30. Le circuit d'alimentation 20 comprend en outre une pompe de gavage 22. Cette pompe de gavage 22 est asservie en pression/débit par un capteur de pression 33 agencé au voisinage de la bouche d'entrée 31 de la tête d'impression 30. Cette pompe de gavage 22 est par exemple une pompe à vis excentrée de manière à pouvoir véhiculer le matériau cimentaire vers la tête d'impression 30 en minimisant les pulsations. Cette pompe de gavage 22 est par exemple une pompe commercialisée sous les références Putzmeister^{®} FP-V Mono. Bien entendu, d'autres pompes peuvent être utilisées sans modifier les performances de l'invention. Le capteur 23 de pression/débit peut-être de tous types connus. Il s'agit par exemple d'un capteur commercialisé sous la référence ifm^{®} PF2953. Bien entendu, d'autres capteurs peuvent être utilisés sans modifier les performances de l'invention. La pompe de gavage 22 est configurée pour suivre une loi d'asservissement prédéterminée et paramétrable par un opérateur en fonction des besoins. Par exemple, la loi d'asservissement est paramétrée pour maintenir la pression du matériau cimentaire entre 2 et 6 bars.

### Tête d'impression

La tête d'impression 30 comprend, tel que représenté sur la figure 3, une bouche d'entrée 31 reliée au circuit d'alimentation 20 et une buse 34 de sortie configurée pour former des cordons de matériau cimentaire.

La tête d'impression comprend en outre une enceinte de mélange 35 agencée en amont de la buse 34 de sortie et dans laquelle débouche le dispositif d'adjuvantation 40, décrit ci-après. L'enceinte de mélange 35 est équipée d'un mélangeur dynamique 36 adapté pour pouvoir mélanger le matériau cimentaire et les adjuvants fournis par le dispositif d'adjuvantation 40.

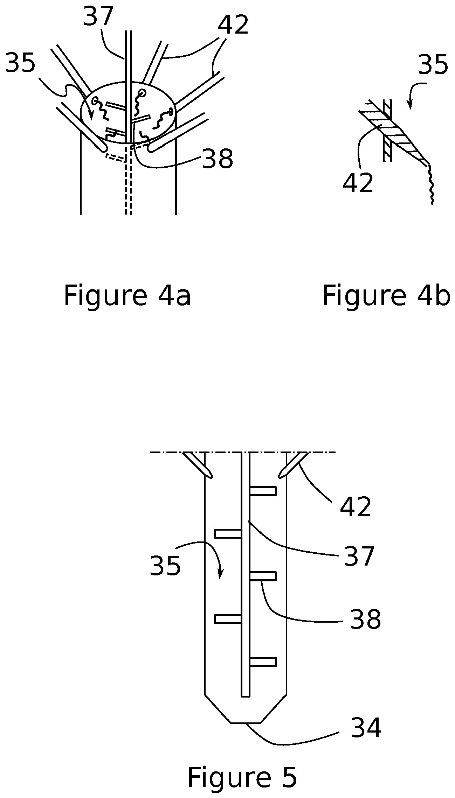

Le mélangeur dynamique 36 comprend, tel que représenté partiellement sur les figures 4a et 5, un arbre 37 s'étendant longitudinalement dans l'enceinte de mélange 35 sur lequel sont montés des doigts radiaux 38 répartis le long de l'arbre 37. Le mélangeur dynamique 36 comprend également un moteur 39 configuré pour pouvoir entrainer l'arbre 37 en rotation de manière à pouvoir fournir un mélange homogène du matériau cimentaire et d'adjuvants. Ce moteur 39 peut être un moteur électrique, un moteur thermique, et de manière générale tous types de moteurs. Selon le mode de réalisation des figures, le moteur 39 est déporté par rapport à l'arbre 37 pour limiter au maximum la perturbation du mélange dans l'enceinte de mélange 35.

La tête d'impression 30 comprend également une pompe de dosage 51 à vis excentrée configurée pour pouvoir véhiculer le matériau cimentaire de la bouche d'entrée 31 vers l'enceinte de mélange 35. Une telle pompe de dosage est par exemple une pompe commercialisée sous les références Viscotec^{®} 3VMP36. Bien entendu, d'autres pompes peuvent être utilisées sans modifier les performances de l'invention.

Selon un autre mode de réalisation non représenté sur les figures, la pompe de dosage 51 est remplacée par un doseur volumétrique configuré pour pouvoir assurer un débit constant sur une plage prédéterminée de fonctionnement.

La tête d'impression 30 comprend également un capteur de pression 52 de sécurité agencé en amont de l'enceinte de mélange 35. Ce capteur est par exemple un capteur commercialisé sous les références ifm^{®} PF2953. Bien entendu, d'autres capteurs peuvent être utilisés sans modifier les performances de l'invention. Ce capteur 52 de sécurité permet de mesurer le pression en amont de l'enceinte de mélange 35 de manière à pouvoir prévenir des risques de bouchage de l'enceinte de mélange 35 ou de la buse de sortie 34. Ce capteur peut par exemple être relié à un système d'arrêt automatique du système d'extrusion dès qu'un seuil de pression est atteint.

La buse de sortie 34 de la tête d'impression est de préférence démontable de manière à pouvoir adapter la forme de la buse de sortie 34 à la pièce à fabriquer. En particulier, la section de la buse de sortie 34 peut être adaptée à chaque type de pièce fabriquée, voir changée en cours d'impression pour modifier la section des cordons de certaines zones de la pièce fabriquée. Pour ce faire, la buse de sortie comprend par exemple une paroi externe filetée qui coopère avec une portion interne filetée de la paroi de la tête d'impression délimitant l'enceinte de mélange 35. Selon une autre variante, la buse de sortie comprend une paroi interne filetée qui coopère avec une portion externe filetée de la paroi de la tête d'impression.

### Dispositif d'adjuvantation

Le dispositif d'adjuvantation 40, comprend tel que représenté sur la figure 2 un fût 41 contenant une pluralité d'adjuvants, des aiguilles 42 reliées au fût 41 par l'intermédiaire de tuyaux 48, de doseurs volumétriques 43 et d'une pompe péristaltique 44. Les doseurs volumétriques sont par exemple les doseurs commercialisés sous la référence Viscotec^{®} eco-PEN600. Bien entendu, d'autres doseurs peuvent être utilisés sans modifier les performances de l'invention. Les adjuvants du fût 41 d'adjuvants peuvent être de tous types. Il s'agit d'adjuvants visant à modifier n'importe quelle propriété physique du matériau cimentaire (principalement sa rhéologie, mais également sa force tensioactive, sa plasticité, sa stabilité, sa thixotropie, etc.).

Les aiguilles 42 débouchent dans l'enceinte de mélange 35, à l'opposée de la buse de sortie 34, suivant une direction d'adjuvantation, qui forme par exemple un angle de 45° avec la direction principale de l'enceinte de mélange.

L'adjuvantation est donc réalisée par l'intermédiaire des doseurs volumétriques qui permettent que les adjuvants soient pompés sous forme liquide dans le fût 41 et conduits à une pression constante dans l'enceinte de mélange 35. Chaque doseur volumétrique 43 est relié à une aiguille 42 de précision par l'intermédiaire d'un dispositif du type luer-lock 49. L'agencement des aiguilles 42 selon une direction d'adjuvantation qui forme de préférence un angle de 45° avec la direction principale de l'enceinte de mélange, qui est la direction d'écoulement du matériau cimentaire, permet d'obtenir un mélange homogène du matériau cimentaire et des adjuvants. Ainsi, le matériau cimentaire à débit constant, obtenu par le biais de la pompe de gavage asservie en pression est mis en contact avec les adjuvants à débit constant, obtenu par le biais des doseurs volumétriques. Le mélangeur dynamique de la tête d'impression permet d'homogénéiser les deux fluides en contact.

Le dispositif d'adjuvantation 40 est destiné à injecter des adjuvants au matériau cimentaire avant extrusion des cordons. Cette injection d'adjuvants permet de modifier les propriétés du matériau cimentaire avant extrusion. Par exemple, les adjuvants sont des agents adaptés pour modifier la rhéologie du matériau avant extrusion, tel qu'un agent de viscosité du type amidon ou tout autre matériau équivalent.

L'invention concerne également un robot de fabrication additive de structures architecturales comprenant un système de positionnement de la tête d'impression, qui est par exemple un bras articulé piloté par une unité de commande. Le robot comprend donc un système d'extrusion de matériau cimentaire selon l'invention et est configuré pour déplacer la tête d'impression du système d'extrusion. Le robot n'est pas représenté sur les figures, mais est bien connu de l'homme du métier. La particularité d'un robot selon l'invention est qu'il met en œuvre un système d'extrusion selon l'invention. Pour ce faire, le système de positionnement tel qu'un bras articulé du robot porte la tête d'impression d'un système d'extrusion selon l'invention et tel que représenté sur la figure 3. Cette tête d'impression est reliée à un dispositif d'adjuvantation et au circuit d'alimentation et au réservoir de stockage d'un système d'extrusion selon l'invention.

Le robot est par exemple un robot six axes, monté sur rails ou non, sur portique ou non. Le robot peut également être un robot à câbles ou tous types de robots dont le système de positionnement, tel qu'un bras articulé, peut être piloté par ordinateur.

Un robot selon l'invention peut être utilisé pour fabriquer tous types de pièces architecturales. Une telle pièce architecturale peut être une pièce de renfort, un bâtiment, et de manière générale, toute pièce en matériau cimentaire. Les pièces architecturales fabriquées par l'utilisation d'un système d'extrusion selon l'invention peuvent être d'échelles variées. Il peut s'agir d'une portion de poteau, d'un poteau entier, d'un mur, d'un élément de dalle, d'un bâtiment, d'un mobilier urbain, d'une sculpture, etc.

## Revendications

1. Système d'extrusion de cordons de matériau cimentaire pour robot de fabrication additive de structures architecturales comprenant :
- une tête de dépose de cordons de matériau cimentaire, dite tête d'impression (30), comprenant une bouche d'entrée (31) de matériau cimentaire, une buse de sortie (34) configurée pour former des cordons de matériau cimentaire et une enceinte de mélange (35) agencée en amont de ladite buse de sortie (34) qui s'étend selon une direction, dite direction longitudinale,
- un circuit d'alimentation (20) en matériau cimentaire de ladite tête d'impression (30) comprenant un réservoir de stockage (10) de matériau cimentaire, une conduite (21) d'alimentation en matériau cimentaire reliant ledit réservoir de stockage (10) et ladite tête d'impression (30), et une pompe de gavage (22) de ladite conduite (21) d'alimentation en matériau cimentaire issu dudit réservoir de stockage (10),
- un dispositif d'adjuvantation (40) relié à ladite tête d'impression (30) en amont de ladite buse de sortie (34) et qui débouche dans ladite enceinte de mélange de manière à pouvoir injecter des adjuvants modifiant les caractéristiques du matériau cimentaire avant éjection desdits cordons de matériau cimentaire par ladite buse de sortie (34),
**caractérisé en ce que** ledit dispositif d'adjuvantation (40) comprend une pluralité d'aiguilles (42) débouchant dans ladite enceinte de mélange (35) selon une direction d'adjuvantation formant avec ladite direction longitudinale un angle compris entre 0 et 90°,chaque aiguille (42) étant reliée à un fût (41) d'adjuvants par l'intermédiaire d'un doseur volumétrique (43), de manière à pouvoir injecter lesdits adjuvants dudit fût d'adjuvants dans ladite enceinte de mélange (35) selon ladite direction d'adjuvantation.

2. Système selon la revendication 1, **caractérisé en ce que** lesdits adjuvants injectés par ledit dispositif d'adjuvantation (40) sont des adjuvants adaptés pour modifier la rhéologie du matériau cimentaire avant extrusion des cordons de matériau cimentaire par la buse de sortie.

3. Système d'extrusion selon l'une des revendications 1 ou 2, **caractérisé en ce que** ledit dispositif d'adjuvantation (40) comprend une pompe (44) péristaltique agencée entre le fût (41) d'adjuvants et lesdits doseurs volumétriques (43).

4. Système d'extrusion selon l'une des revendications 1 à 3, **caractérisé en ce que** ladite tête d'impression (30) comprend en outre ;
- un mélangeur dynamique (36) configuré pour pouvoir mélanger ledit matériau cimentaire et lesdits adjuvants fournis par ledit dispositif d'adjuvantation (40) dans ladite enceinte de mélange (35),
- une pompe de dosage (51) à vis excentrée configurée pour pouvoir véhiculer le matériau cimentaire de ladite bouche d'entrée (31) de ladite tête d'impression vers ladite enceinte de mélange (35).

5. Système d'extrusion selon la revendication 4, **caractérisé en ce que** ledit mélangeur dynamique (36) comprend au moins un arbre (37) s'étendant dans l'enceinte de mélange (35) selon ladite direction longitudinale, et portant des doigts radiaux (38) répartis le long de l'arbre (37), et un moteur (39) configuré pour pouvoir entrainer cet arbre (37) en rotation de manière à pouvoir fournir un mélange homogène du matériau cimentaire et des adjuvants.

6. Système d'extrusion selon l'une des revendications 1 à 5, **caractérisé en ce qu'**il comprend un capteur de pression dudit matériau cimentaire en amont de l'enceinte de mélange, dit capteur de sécurité (52), configuré pour mesurer la pression en amont de ladite enceinte de mélange (35) de manière à pouvoir prévenir des risques de bouchage de l'enceinte de mélange (35) ou de la buse de sortie (34).

7. Système d'extrusion selon l'une des revendications 1 à 6, **caractérisé en ce qu'**il comprend en outre un capteur (33) de pression/débit dudit matériau cimentaire circulant dans ladite tête d'impression (30) adapté pour transmettre des mesures de pression/débit à ladite pompe de gavage (22), et **en ce que** ladite pompe de gavage (22) est configurée pour asservir le gavage de la conduite (21) d'alimentation auxdites mesures transmises par ledit capteur (33).

8. Système d'extrusion selon l'une des revendications 1 à 7, **caractérisé en ce que** ladite pompe de gavage (22) est une pompe à vis excentrée de manière à limiter les pulsations dans ladite conduite (21) d'alimentation.

9. Système d'extrusion selon l'une des revendications 1 à 8, **caractérisé en ce que** ledit réservoir de stockage (10) dudit circuit d'alimentation est une trémie comprenant une ouverture supérieure (11) de réception de gâchées de matériaux cimentaires et une sortie inférieure (12) reliée à ladite conduite (21) d'alimentation.

10. Système d'extrusion selon la revendication 9, **caractérisé en ce que** ladite trémie est équipé d'un agitateur (13) comprenant un arbre (14) portant une pluralité de pales (15) latérales, et un moteur (16) de mise en rotation de l'arbre (14) de manière à pouvoir remuer le matériau cimentaire de ladite trémie.

11. Système d'extrusion selon l'une des revendications 1 à 10, **caractérisé en ce qu'**il présente une section constante depuis la pompe de gavage (22) jusqu'à la buse de sortie (34) de manière à pouvoir véhiculer le matériau cimentaire sans générer de zones de perturbation.

12. Robot de fabrication additive de structures architecturales comprenant un système de positionnement, tel qu'un bras articulé, piloté par une unité de commande, **caractérisé en ce qu'**il comprend un système d'extrusion de matériau cimentaire selon l'une des revendications 1 à 11.

## Patentansprüche

1. System zum Extrudieren von Strängen aus zementartigem Material für einen Roboter zur additiven Herstellung architektonischer Strukturen, umfassend:
- einen Kopf zum Ablegen von Strängen aus zementartigem Material, Druckkopf (30) genannt, mit einer Einlassöffnung (31) für zementartiges Material, einer Auslassdüse (34), die so ausgestaltet ist ist, Stränge aus zementartigem Material zu bilden, und einem Mischraum (35), der vor der Auslassdüse (34) angeordnet ist und sich in einer Richtung, Längsrichtung genannt, erstreckt,
- einen Versorgungskreislauf (20) mit Zementmaterial zu dem Druckkopf (30), der einen Vorratsbehälter (10) für Zementmaterial, eine Versorgungsleitung (21) für Zementmaterial, die den Vorratsbehälter (10) und den Druckkopf (30) verbindet, und eine Pumpe (22) zum Auffüllen der Versorgungsleitung (21) mit Zementmaterial aus dem Vorratsbehälter (10) umfasst,
- eine Zusatzstoff-Vorrichtung (40), die mit dem Druckkopf (30) stromaufwärts der Austrittsdüse (34) verbunden ist und in den Mischraum mündet, so dass sie Zusatzstoffe einspritzen kann, die die Eigenschaften des zementartigen Materials verändern, bevor die Stränge des zementartigen Materials durch die Austrittsdüse (34) ausgestoßen werden,
**dadurch gekennzeichnet, dass** die Zusatzstoff-Vorrichtung (40) mehrere Nadeln (42) umfasst, die in den Mischraum (35) gemäß einer Zusatzstoff-Richtung münden, die mit der Längsrichtung einen Winkel zwischen 0 und 90° bildet, wobei jede Nadel (42) über ein volumetrisches Dosiergerät (43) mit einem Zusatzstoff-Fass (41) verbunden ist, so dass die Zusatzstoffe aus dem Zusatzstoff-Fass in den Mischraum (35) in der Zusatzstoffrichtung eingespritzt werden können.

2. System nach Anspruch 1, **dadurch gekennzeichnet, dass** die Zusatzstoffe, die von der Zusatzstoff-Vorrichtung (40) injiziert werden, Zusatzstoffe sind, die geeignet sind, die Rheologie des zementartigen Materials vor der Extrusion der Stränge des zementartigen Materials durch die Auslassdüse zu modifizieren.

3. Extrusionssystem nach einem der Ansprüche 1 oder 2, **dadurch gekennzeichnet, dass** die Zusatzstoff-Vorrichtung (40) eine peristaltische Pumpe (44) umfasst, die zwischen dem Zusatzstoff-Fass (41) und den volumetrischen Dosiergeräten (43) angeordnet ist.

4. Extrusionssystem nach einem der Ansprüche 1 bis 3, **dadurch gekennzeichnet, dass** der Druckkopf (30) weiter umfasst:
- einen dynamischen Mischer (36), der so ausgestaltet ist, dass er das zementartige Material und die Zusatzstoffe, die von der Zusatzstoff-Vorrichtung (40) in die Mischkammer (35) eingebracht werden, mischen kann,
- eine Exzenterschnecken-Dosierpumpe (51), die so ausgestaltet ist, dass sie das Zementmaterial von der Einlauföffnung (31) des Druckkopfes in den Mischraum (35) befördern kann.

5. Extrusionssystem nach Anspruch 4, **dadurch gekennzeichnet, dass** der dynamische Mischer (36) mindestens eine Welle (37) umfasst, die sich in Längsrichtung in den Mischraum (35) erstreckt und radiale Finger (38) aufweist, die entlang der Welle (37) verteilt sind, sowie einen Motor (39), der so ausgestaltet ist, dass er die Welle (37) in Drehung versetzen kann, um eine homogene Mischung aus zementartigem Material und Zusatzstoffen zu bilden.

6. Extrusionssystem nach einem der Ansprüche 1 bis 5, **dadurch gekennzeichnet, dass** es einen Drucksensor für das zementartige Material stromaufwärts des Mischbehälters, den sogenannten Sicherheitssensor (52), umfasst, der so ausgestaltet ist, dass er den Druck stromaufwärts des Mischbehälters (35) erfasst, um die Gefahr einer Verstopfung des Mischbehälters (35) oder der Austrittsdüse (34) zu verhindern.

7. Extrusionssystem nach einem der Ansprüche 1 bis 6, **dadurch gekennzeichnet, dass** es weiter einen Sensor (33) für den Druck/Durchsatz des in dem Druckkopf (30) zirkulierenden zementartigen Materials umfasst, der so ausgestaltet ist, dass er Druck/Durchsatz-Messwerte an die Förderpumpe (22) überträgt, und dass die Förderpumpe (22) so ausgestaltet ist, dass sie die Beschickung der Versorgungsleitung (21) an die von dem Sensor (33) übertragenen Messwerte anpasst.

8. Extrusionssystem nach einem der Ansprüche 1 bis 7, **dadurch gekennzeichnet, dass** die Förderpumpe (22) eine exzentrische Schraubenpumpe ist, um die Pulsationen in der Versorgungsleitung (21) zu begrenzen.

9. Extrusionssystem nach einem der Ansprüche 1 bis 8, **dadurch gekennzeichnet, dass** der Vorratsbehälter (10) des Versorgungskreislaufs ein Trichter ist, der eine obere Öffnung (11) aufweist, zur Aufnahme einer Menge aus zementartigen Materialien und einen unteren Auslass (12), der mit der Zuführleitung (21) verbunden ist.

10. Extrusionssystem nach Anspruch 9, **dadurch gekennzeichnet, dass** der Trichter mit einem Rührwerk (13) ausgestattet ist, das eine Welle (14) mit mehrere seitlichen Schaufeln (15) und einen Motor (16) zum Drehen der Welle (14) umfasst, so dass das Zementmaterial in dem Trichter gerührt werden kann.

11. Extrusionssystem nach einem der Ansprüche 1 bis 10, **dadurch gekennzeichnet, dass** es von der Förderpumpe (22) bis zur Austrittsdüse (34) einen konstanten Querschnitt aufweist, so dass das Zementmaterial ohne Erzeugung von Störbereichen transportiert werden kann.

12. Roboter zur additiven Herstellung architektonischer Strukturen mit einem Positionierungssystem, wie einem Gelenkarm, das von einer Steuereinheit gesteuert wird, **dadurch gekennzeichnet, dass** er ein System zum Extrudieren von zementartigem Material nach einem der Ansprüche 1 bis 11 umfasst.

## Claims

1. System for extruding cords of cementitious material for additive manufacturing robot of architectural structures comprising:
- a head for depositing cords of cementitious material, called the print head (30), comprising an inlet (31) of cementitious material, an outlet nozzle (34) configured to form cords of cementitious material and a mixing enclosure (35) arranged upstream of said outlet nozzle (34) which extends along a direction, called the longitudinal direction,
- a supply circuit (20) of cementitious material to said print head (30) comprising a cementitious material storage tank (10), a cementitious material supply line (21) connecting said storage tank (10) and said print head (30), and a booster pump (22) for said conduct (21) supply of cementitious material from said storage tank (10),
- an admixture device (40) connected to said print head (30) upstream of said outlet nozzle (34) and which opens into said mixing chamber so as to be able to inject admixtures modifying the characteristics of the cementitious material before ejection of said cords of cementitious material through said outlet nozzle (34), **characterized in that** said admixture device (40) comprises a plurality of needles (42) opening into said mixing enclosure (35) along an admixture direction forming with said longitudinal direction an angle of between 0 and 90°, each needle (42) being connected to a drum (41) of adjuvants via a volumetric dispenser (43), so as to be able to inject said adjuvants from said drum of adjuvants into said mixing chamber (35) according to said direction of adjuvantation.

2. System according to Claim 1, **characterized in that** the said additives injected by the said additive device (40) are additives suitable for modifying the rheology of the cementitious material before the cords of cementitious material are extruded through the outlet nozzle.

3. System according to one of Claims 1 or 2, **characterized in that** the said additive device (40) comprises a peristaltic pump (44) arranged between the barrel (41) of additives and the said volumetric dispensers (43) .

4. System according to one of Claims 1 to 3, **characterized in that** the said printing head (30) further comprises;
- a dynamic mixer (36) configured to be able to mix said cementitious material and said admixtures supplied by said admixture device (40) in said mixing enclosure (35),
- an eccentric screw metering pump (51) configured to be able to convey the cementitious material from said inlet mouth (31) of said printhead to said mixing enclosure (35).

5. System according to Claim 4, **characterized in that** the said dynamic mixer (36) comprises at least one shaft (37) extending into the mixing enclosure (35) in the said longitudinal direction, and carrying radial fingers ( 38) distributed along the shaft (37), and a motor (39) configured to be able to drive this shaft (37) in rotation so as to be able to provide a homogeneous mixture of the cementitious material and the admixtures.

6. System according to one of Claims 1 to 5, **characterized in that** it comprises a pressure sensor of said cementitious material upstream of the mixing enclosure, called a safety sensor (52), configured to measure the pressure upstream of said mixing enclosure (35) so as to be able to prevent the risk of clogging of the mixing enclosure (35) or of the outlet nozzle (34).

7. System according to one of Claims 1 to 6, **characterized in that** it further comprises a pressure/flow sensor (33) of said cementitious material circulating in said printing head (30) adapted to transmit measurements pressure/flow rate to said booster pump (22), and **in that** said booster pump (22) is configured to slave the boosting of the supply pipe (21) to said measurements transmitted by said sensor (33).

8. System according to one of Claims 1 to 7, **characterized in that** the said booster pump (22) is an eccentric screw pump so as to limit the pulsations in the said supply line (21).

9. System according to one of Claims 1 to 8, **characterized in that** the said storage tank (10) of the said supply circuit is a hopper comprising an upper opening (11) for receiving batches of cementitious materials and an outlet bottom (12) connected to said supply line (21).

10. System according to Claim 9, **characterized in that** the said hopper is equipped with an agitator (13) comprising a shaft (14) carrying a plurality of lateral blades (15), and a motor (16) for of the shaft (14) so as to be able to stir the cementitious material of said hopper.

11. System according to one of Claims 1 to 10, **characterized in that** it has a constant section from the booster pump (22) to the outlet nozzle (34) so as to be able to convey the cementitious material without generating disturbance zones.

12. Additive manufacturing robot for architectural structures comprising a positioning system, such as an articulated arm, controlled by a control unit, **characterized in that** it comprises a cementitious material extrusion system according to one of Claims 1 to 11.
